Europäisches Patentamt

European Patent Office

Office européen des brevets

(19)

(11) Numéro de publication : **0 136 233**
**B1**

(12)                    FASCICULE DE BREVET EUROPÉEN

(45) Date de publication du fascicule du brevet :
25.03.87

(51) Int. Cl.⁴ : **B 62 D 5/06**, B 62 D 5/08

(21) Numéro de dépôt : **84401850.7**

(22) Date de dépôt : **19.09.84**

(54) Mécanisme de direction assistée compacte pour véhicule automobile.

(30) Priorité : 21.09.83 ES 525775

(43) Date de publication de la demande :
03.04.85 Bulletin 85/14

(45) Mention de la délivrance du brevet :
25.03.87 Bulletin 87/13

(84) Etats contractants désignés :
DE FR GB IT

(56) Documents cités :
EP-A- 0 077 710
EP-A- 0 119 922
EP-A- 0 119 923
FR-A- 1 274 434
FR-A- 2 204 168
FR-A- 2 209 899
FR-A- 2 357 413
US-A- 3 347 109
US-A- 4 141 432

(73) Titulaire : **BENDIX ESPANA S.A.**
**Balmes 243**
**Barcelona 6 (ES)**

(72) Inventeur : **Estela Rosell, Jorge**
**c/Escornalbou 23 1 1a**
**Barcelona 26 (ES)**

(74) Mandataire : **Le Moenner, Gabriel et al**
**SERVICE BREVETS BENDIX 44, Rue François 1er**
**F-75008 Paris (FR)**

## Description

La présente invention concerne les mécanismes de direction assistée par pression de fluide pour véhicules automobiles et, plus particulièrement, un mécanisme de direction assistée du type comprenant un boîtier de direction fixe dans lequel est agencé un pignon destiné à être relié à un organe de commande d'entrée du mécanisme et coopérant avec une structure de crémaillère comportant des moyens de liaison à des embiellages de roues orientables du véhicule ; un ensemble d'assistance à fluide sous pression comprenant au moins un piston fixe à l'extrémité d'une tige de piston s'étendant à partir d'une extrémité d'un carter solidarisé au boîtier fixe, à l'intérieur du carter, et un cylindre mobile disposé coaxialement dans une partie de corps cylindrique de la crémaillère.

Un document de ce type est décrit dans le document FR-A-2 209 899. Ce document décrit un mécanisme de direction assistée d'un type particulier, dans lequel les chambres antagonistes de l'ensemble d'assistance, définies dans deux cylindres en opposition, sont en permanence maintenues sous pression, les cylindres étant couplés élastiquement à une structure de crémaillère composite et télescopique dans laquelle les cylindres sont entièrement intégrés, le moyen de valve, du type à échappement, étant interposé entre une portion de la structure de crémaillère et les cylindres et étant mis en œuvre, sous l'effet d'un déplacement relatif entre ces composants, pour dépressuriser une des chambres et déséquilibrer ainsi, en vue d'une assistance, le mécanisme, lequel présente les inconvénients d'un dimensionnement axial important et avec des sections efficaces de chambres faibles compte tenu de la pressurisation permanente des chambres et des problèmes de tenue mécanique afférents, se traduisant par un poids global et une inertie importants, des coûts de fabrication et de montage conséquents, et ne permettant pas la réalisation de versions à double circuit.

La présente invention a pour objet de proposer un mécanisme de direction assistée du type défini plus haut, se présentant sous une configuration particulièrement compacte et légère, de conception simple et robuste et offrant une grande versatilité d'utilisations potentielles.

Pour ce faire, selon l'invention la structure de crémaillère est constituée par un corps de crémaillère guidé à coulissement dans le boîtier de direction, le cylindre étant solidarisé au corps de crémaillère et comportant une portion s'étendant coaxialement au-delà du corps de crémaillère et dont l'extrémité extérieure comporte un anneau d'étanchéité coopérant à coulissement avec la tige de piston, définissant, avec le piston, une chambre annulaire, et en ce que le moyen de valve d'actionnement est un moyen de valve de distribution actionnable par l'organe de commande d'entrée pour admettre sélectivement un fluide sous pression dans l'une ou l'autre desdites chambres.

Avec un tel agencement, utilisable avec des valves de distribution classiques, au moins une des chambres, présentant une section efficace importante, peut être intégrée dans la crémaillère.

Cet agencement autorise de plus la réalisation d'un mécanisme de direction assistée compacte à double circuit, piloté par un moyen de valve de distribution adéquat, avec tous les avantages inhérents à ce type de mécanisme de direction assistée.

A cet effet, selon un mode de réalisation de l'invention, le mécanisme comprend un moyen de valve de distribution à double circuit et une paire dedits ensembles d'assistance à fluide sous pression de part et d'autre du corps de crémaillère.

Les documents FR-A-1 274 434 et FR-A-2 204 168 décrivent tous deux, pour leur part, des mécanismes de direction assistée dans lequel le cylindre mobile est fixé à une extrémité de la crémaillère, dans le prolongement de celle-ci, le piston fixe étant solidaire d'une tige fixée au châssis du véhicule.

D'autres caractéristiques et avantages de la présente invention ressortiront de la description suivante d'un mode de réalisation, donné à titre illustratif mais nullement limitatif, faite en relation avec les dessins annexés, sur lesquels

la Figure 1 est une vue, partiellement en coupe longitudinale d'un mécanisme de direction assistée à double circuit selon l'invention ; et

la Figure 2 est une vue en coupe transversale suivant le plan de coupe II-II de la Fig. 1.

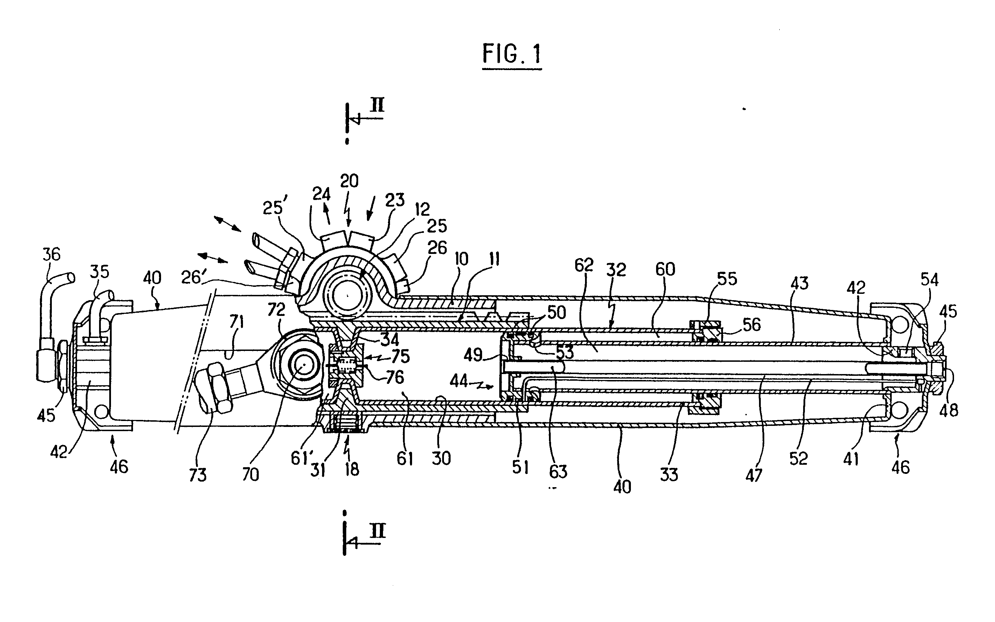

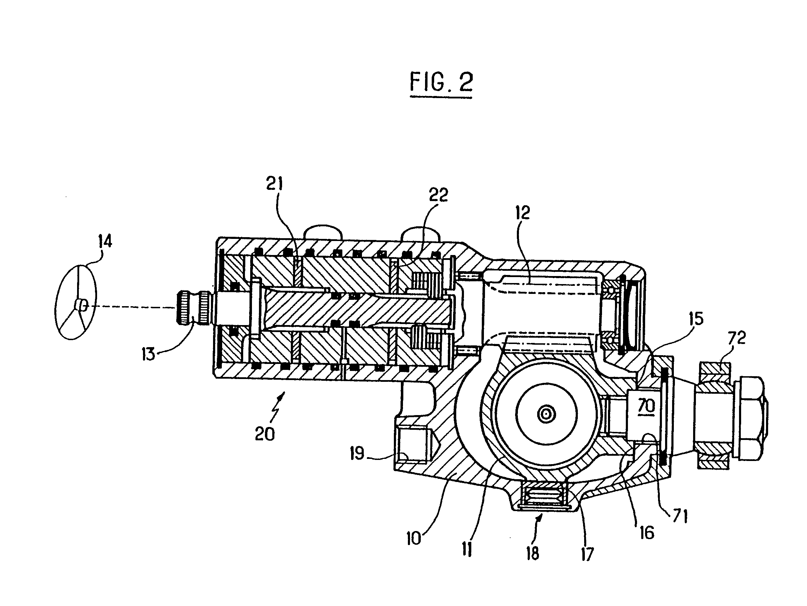

On a représenté sur les Fig. 1 et 2 un mécanisme de direction assistée à sortie centrale selon l'invention, comprenant un boîtier de direction 10, réalisé avantageusement en fonderie, dans lequel est monté à coulissement un corps de crémaillère 11, réalisé également éventuellement en fonderie, coopérant avec un pignon 12 tourillonnant dans le boîtier 10 est actionné, *via* une valve de distribution rotative 20, également avantageusement montée dans un prolongement cylindrique du boîtier 10, par un organe d'entrée 13 destiné à être relié à un volant de direction 14 du véhicule automobile.

Comme on le voit bien sur la Fig. 2, le corps de la crémaillère 11 est tubulaire mais comporte une première partie extérieure en saillie définissant une face plane de coulissement 15 destinée à porter contre une face d'appui correspondante 16 formée intérieurement sur une paroi du boîtier 10, et une seconde partie extérieure en saillie définissant une face de coulissement plane 17 à l'opposé de la denture de la crémaillère engrenant avec le pignon 12 et destinée à coopérer avec un dispositif de réaction élastique 18 monté dans le boîtier 10. Le boîtier 10 comporte des moyens, tels que 19, de solidarisation au châssis du véhicule automobile.

Comme on le voit bien sur la Fig. 1, le corps tubulaire de crémaillère 11 est formé intérieurement avec un alésage longitudinal 30 interrompu centralement par une couronne faisant saillie radialement vers l'intérieur 31 séparant ainsi l'alésage 30 en deux parties symétriques. Dans chaque partie de l'alésage 30 est emmanché un cylindre 32 s'étendant axialement au-delà du corps de crémaillère 11 en se terminant par une extrémité ouverte 33, la partie de cylindre reçue dans l'alésage 30 comportant une partie de fond 34 en appui sur la cloison annulaire 31, les parties de fond 34 des deux cylindres 32 emmanchés de part et d'autre dans les parties d'alésage 30 étant avantageusement solidarisées l'une à l'autre, par exemple par soudure.

Sur le boîtier 10 est rapporté, de part et d'autre du pignon 12, un carter 40 comportant une collerette d'extrémité rabattue vers l'intérieur 41 dans laquelle est fixé, au moyen d'un embout 42, un tube 43 s'étendant centralement à l'intérieur du cylindre 32, une structure de piston 44 étant fixée sur l'extrémité du tube 43 opposée à l'embout 42. L'embout 42 est relié, par exemple par un boulon 45, à une ferrure 46 destinée également à être fixée sur le châssis du véhicule. Dans le tube fixe 43 est disposé un tube de plus petit diamètre 47 traversant l'embout 42 et communiquant, dans ce dernier, avec une ouverture de raccordement 48, comme on le verra plus loin, l'extrémité opposée (intérieure) de la tubulure 47 traversant le moyen de piston 44 et étant avantageusement obturée en bout tout en étant pourvue d'une ouverture 49 débouchant vers l'extérieur, au-delà du piston 44. Ce piston 44 comporte deux joints d'étanchéité coulissants 50 coopérant avec la paroi interne du cylindre 32, axialement espacés l'un de l'autre ; une gorge annulaire 51 est ménagée dans le piston entre ces joints 50 et communique avec l'extérieur, via l'embout, au moyen d'un tube fin de drainage 52 s'étendant dans le tube 43 jusqu'à l'embout 42. Le tube 43 comporte une ouverture 53 débouchant vers l'extérieur juste en avant du piston 44, l'embout 42 comportant une ouverture de raccordement 54 communiquant avec l'intérieur du tube 43.

Sur l'extrémité extérieure du cylindre 32 est montée, au moyen d'une bague filetée 55, une structure de joint coulissant 56 coopérant à coulissement étanche avec la surface extérieure du tube 43 et séparant ainsi la zone annulaire intérieure adjacente du cylindre 32 de l'intérieur du carter 40.

De cette façon on voit que, au moins d'un côté de la crémaillère, et avantageusement de part et d'autre de celle-ci, le piston fixe 44 et sa tige fixe 43 définissent dans le cylindre 32 une première chambre ou chambre annulaire primaire 60 du côté du piston opposé à la crémaillère, cette chambre annulaire 60 étant délimitée extérieurement par l'élément de joint coulissant 56 porté par l'extrémité extérieure du cylindre 32, et une seconde chambre ou chambre secondaire centrale 61 du côté du piston tourné vers le pignon 12 et délimitée intérieurement par le fond 34 du cylindre 32 (ce fond 34 pouvant, en variante, être rapporté au centre de l'alésage 30). La chambre primaire annulaire 60 est alimentée en fluide de commande sous pression en provenance d'une des ouvertures de distribution de la valve de distribution 20 en branchant une conduite, telle que 35, entre cette ouverture de distribution et l'ouverture de raccordement 54, la chambre 60 pouvant ainsi être alimentée en fluide sous pression par le canal intérieur 62 formé dans le tube 43 entre les ouvertures 54 et 53. De façon similaire, la chambre intérieure ou secondaire 61 peut être reliée à une autre ouverture de distribution de la valve 20 en branchant, entre cette ouverture de distribution de la valve et l'ouverture de raccordement 48, une tubulure telle que 36 pour acheminer ainsi un fluide sous pression dans la chambre secondaire 61 via le canal intérieur 63 formé par le tube de diamètre réduit 47 entre les ouvertures 48 et 49.

Dans le mode de réalisation représenté, correspondant à un mécanisme de direction assistée à double circuit, la valve de distribution 20 comporte un équipage de distribution de circuit primaire 21 et, coaxial à celui-ci, un équipage de distribution de circuit secondaire 22. La valve 20 comporte donc ainsi, outre les ouvertures classiques d'entrée 23 et de retour 24 de fluide, une paire d'ouvertures de distribution 25 et 26 pour les chambres primaire 60 et secondaire 61 d'un côté de la crémaillère et une paire d'ouvertures de distribution équivalentes 25' et 26' pour les chambres primaire et secondaire de l'autre côté de la crémaillère. Ainsi, selon l'agencement des équipages de valves 21 et 22, chaque chambre secondaire (en opposition l'une de l'autre) peut être utilisée pour ajouter son effet à celui de la chambre primaire opposée dans certains cas de conduite, ou pour se substituer (en inversion) à la chambre primaire, chaque circuit ayant des caractéristiques de pression et/ou de débit différentes. La valve de distribution 20 est constituée par exemple par deux valves en série à rotors en étoile et à ressorts en C du type décrit dans la demande de brevet EP-A-0 077 710 au nom de la demanderesse.

Le mécanisme de direction assistée représenté sur les Fig. 1 et 2 est du type dit à sortie centrale et, comme on le voit bien sur la Fig. 2, la partie en saillie formant la surface de coulissement 15 du corps de crémaillère 11 est reliée à une paire d'éléments d'axe 70 traversant à coulissement une fenêtre oblongue 71 formée dans la paroi du boîtier 10 définissant la surface d'appui 16, chaque élément d'axe 70 comportant un raccord articulé 72 de liaison à une biellette 73 d'actionnement de roues orientables du véhicule (non représentées). Dans le mode de réalisation représenté sur la Fig. 1, un système double de clapets de bipasse (en opposition) 75 est aménagé entre les deux chambres intérieures 61 et 61' en étant monté dans les fonds 34 des cylindres 32, chaque clapet, normalement fermé, comportant une tige 76 faisant saillie dans la chambre intérieure correspondante 61 et susceptible de venir porter, en fin de course du mécanisme de direction assistée dans une direction, contre le fond obturé du tube 47 pour détruire la différentielle de pression entre les chambres opposées du circuit correspondant et réaliser ainsi une butée de sécurité hydraulique du mécanisme.

## Revendications

1. Mécanisme de direction assistée pour véhicule automobile, comprenant : un boîtier de direction fixe (10) dans lequel est agencé un pignon (12) destiné à être relié à un organe (14) de commande d'entrée du mécanisme et coopérant avec une structure de crémaillère (11) comportant des moyens (70, 72) de liaison à des embiellages (73) de roues orientables du véhicule ; un ensemble d'assistance à fluide sous pression comprenant au moins un piston fixe (44) à l'extrémité d'une tige de piston (43) s'étendant à partir d'une extrémité (41) d'un carter (40) solidarisé au boîtier fixe, à l'intérieur du carter, et un cylindre mobile (32) disposé coaxialement dans une partie de corps cylindrique de la crémaillère (11) et délimitant avec le piston (44) une chambre de pression communiquant avec un moyen de valve d'actionnement (20), caractérisé en ce que la structure de crémaillère est constituée par un corps de crémaillère (11) guidé à coulissement dans le boîtier de direction (10), le cylindre (32) étant solidarisé au corps de crémaillère (11) et comportant une portion s'étendant coaxialement au-delà du corps de crémaillère et dont l'extrémité extérieure (33) comporte un anneau d'étanchéité (56) coopérant à coulissement avec la tige de piston (43), définissant, avec le piston, une chambre annulaire (60), et en ce que le moyen de valve d'actionnement est un moyen de valve de distribution (20) actionnable par l'organe de commande d'entrée pour admettre sélectivement un fluide sous pression dans l'une ou l'autre desdites chambres.

2. Mécanisme de direction assistée selon la revendication 1, caractérisé en ce que le cylindre (32) est emmanché dans un alésage (30) de la partie de corps cylindrique (32) de la crémaillère (11).

3. Mécanisme de direction assistée selon la revendication 1 ou la revendication 2, caractérisé en ce que la tige (43) du piston fixe (44) renferme des canaux distincts (62, 63) pour l'alimentation respective desdites chambres (60, 61) et comportant, au voisinage de l'extrémité (41) du carter (40), des moyens de raccordement (48, 56) au moyen de valve de distribution (20).

4. Mécanisme de direction assistée selon l'une des revendications 1 à 3, caractérisé en ce que le piston (44) comprend deux organes d'étanchéité coulissants (50) coaxialement espacés l'un de l'autre, et un conduit de drainage (52) débouchant dans une gorge annulaire (51) disposée entre ces deux organes d'étanchéité (50).

5. Mécanisme de direction assistée selon l'une des revendications 1 à 4, caractérisé en ce que le corps de crémaillère (11) porte à coulissement contre une surface intérieure complémentaire (16) formée par une paroi du boîtier (10), les moyens de liaison (70) s'étendant vers l'extérieur au travers d'une lumière oblongue (71) formée dans ladite paroi de boîtier.

6. Mécanisme de direction assistée selon l'une des revendications 2 à 5, caractérisé en ce qu'il comprend un moyen de valve de distribution (20) à double circuit (21, 22) et une paire desdits ensembles d'assistance (44, 43-32) de part et d'autre du corps de crémaillère (11).

7. Mécanisme de direction assistée selon la revendication 6, caractérisé en ce que les chambres adjacentes (61, 61') des deux ensembles d'assistance sont susceptibles de communiquer mutuellement *via* un système double de clapets de bipasse (75) disposé dans les fonds adjacents (34) des cylindres (32).

8. Mécanisme de direction assistée selon la revendication 7, caractérisé en ce que les clapets du système de bipasse sont chacun sélectivement actionnables en fin de course par butée contre le piston correspondant (44, 47).

## Claims

1. Servo steering mechanism for an automotive vehicle, comprising : a fixed steering housing (10) containing a pinion (12) to be connected to an input control member (14) of the mechanism and cooperating with a rack structure (11) comprising means (70, 72) for connection to a linkage (73) of steerable wheels of the vehicle ; a fluid pressure servo assembly comprising at least one fixed piston (44) at the extremity of a piston rod (43) extending from one extremity (41) of a casing (40) mounted to the fixed housing, into the interior of the casing, and a movable cylinder (32) disposed coaxially within a portion of the cylindrical body of the rack (11) and delimiting with the piston (44) a pressure chamber communicating with a actuating valve means (20), characterized in that the rack structure is comprised of a rack body (11) slidingly guided in the steering housing (10), the cylinder (32) being mounted to the rack body (11) and comprising a portion extending coaxially beyond the rack body and having and external extremity (33) comprising a sealing ring (56) slidingly cooperating with the piston rod (43) to define with the piston an annular chamber (60), and in that the actuating valve means is a distributor valve means (20) actuatable by the input control member to admit selectively a pressure fluid in the one or the other of said chambers.

2. Servo steering mechanism according to claim 1, characterized in that the cylinder (32) is fitted in a bore (30) of the cylindrical body portion (32) of the rack (11).

3. Servo steering mechanism according to claim 1 or claim 2, characterized in that the rod (43) of the fixed piston (44) includes distinct passages (62, 63) for feeding respective ones of said chambers (60, 61) and comprising adjacent to the extremity (41) of the casing (40) means (48, 56) for connection to the distributor valve means.

4. Servo steering mechanism according to any of claims 1 to 3, characterized in that the piston (44) comprises two sliding sealing members (50) coaxially spaced from each other, and a drain conduit (52) opening into an annular groove (53) disposed between said two sealing members (50).

5. Servo steering mechanism according to any of claims 1 to 4, characterized in that the rack body (11) slidingly engages a complementary internal surface (16) formed by a wall of the housing (10), the connection means (70) extending towards the exterior across an elongated slot (71) formed in said wall of the housing.

6. Servo steering mechanism according to any of claims 2 to 5, characterized in that it comprises a double circuit (21, 22) distributor valve means (22) and a pair of said servo assemblies (44, 43-32) on either side of the rack body (11).

7. Servo steering mechanism according to claim 6, characterized in that the adjacent chambers (61, 61') of the two servo assemblies are adapted to mutually communicate via a double valve bypass system (75) disposed in the adjacent bottoms (34) of the cylinders (32).

8. Servo steering mechanism according to claim 7, characterized in that the valves of the bypass system each are selectively actuatable at the end of the stroke by abutment against the corresponding piston (44, 47).

**Patentansprüche**

1. Lenkhilfe für ein Kraftfahrzeug, mit einem festgelegten Lenkgehäuse (10), in dem ein Zahnrad (12) angeordnet ist, das mit einem als Lenkhilfeeingang dienenden Steuerorgan (14) verbindbar ist und mit einer Zahnstangenanordnung (11) zusammenwirkt, die Verbindungsmittel (70, 72) zur Verbindung mit einem Gestänge (73) der lenkbaren Kraftfahrzeugräder aufweist, einer Druckmittel-Servoeinrichtung mit mindestens einem festgelegten Kolben (44) am Ende einer Kolbenstange (43), die sich vom einen Ende (41) eines mit dem Lenkgehäuse fest verbundenen Servogehäuses (40) ins Innere des Servogehäuses erstreckt, und einem beweglichen Zylinder (32), der koaxial in einem Abschnitt des zylindrischen Körpers der Zahnstange (11) angeordnet ist und mit dem Kolben (44) eine Druckkammer begrenzt, die mit einem Betätigungsventil (20) in Verbindung steht, dadurch gekennzeichnet, daß die Zahnstangenanordnung von einem Zahnstangenkörper (11) gebildet wird, der in dem Lenkgehäuse (10) gleitend geführt ist, wobei der Zylinder (32) mit dem Zahnstangenkörper (11) fest verbunden ist und einen Abschnitt aufweist, der sich axial über den Zahnstangenkörper hinaus erstreckt und dessen äußeres Ende (33) einen Dichtring (56) aufweist, der mit der Kolbenstange (43) gleitend zusammenwirkt, um mit dem Kolben eine Ringkammer (60) zu bilden, und daß das Betätigungsventil ein Verteilerventil (20) ist, das durch das Steuerglied betätigbar ist, um ein Druckmittel wahlweise in die eine oder die andere der Kammern einzulassen.

2. Lenkhilfe nach Anspruch 1, dadurch gekennzeichnet, daß der Zylinder (32) in einer Bohrung (30) des zylindrischen Körpers (32) der Zahnstange (11) eingepaßt ist.

3. Lenkhilfe nach Anspruch 1 oder 2, dadurch gekennzeichnet, daß die Stange (43) des festgelegten Kolbens (44) getrennte Kanäle (62, 63) zur Beaufschlagung der betreffenden Kammern (60, 61) enthält und im Bereich des Endes (41) des Servogehäuses (40) Anschlußmittel (48, 56) zum Anschluß am Verteilerventil (20) aufweist.

4. Lenkhilfe nach einem der Ansprüche 1 bis 3, dadurch gekennzeichnet, daß der Kolben (44) versehen ist mit zwei gleitenden Dichtelementen (50), die koaxial zueinander beabstandet sind, und einer Abflußleitung (52), die in einer Ringnut (51) zwischen den beiden Dichtelementen (50) mündet.

5. Lenkhilfe nach einem der Ansprüche 1 bis 4, dadurch gekennzeichnet, daß der Zahnstangenkörper (11) an einer komplementären Innenfläche (16) gleitend geführt ist, die von einer Wand des Lenkgehäuses (10) gebildet wird, wobei die Verbindungsmittel (70) sich nach außen durch einen länglichen Schlitz (71) erstrecken, der in dieser Wand des Lenkgehäuses gebildet ist.

6. Lenkhilfe nach einem der Ansprüche 2 bis 5, dadurch gekennzeichnet, daß sie ein Zweikreis (21, 22) -Verteilerventil (20) sowie zwei Servoeinrichtungen (44, 43-32) zu beiden Seiten des Zahnstangenkörpers (11) aufweist.

7. Lenkhilfe nach Anspruch 6, dadurch gekennzeichnet, daß die benachbarten Kammern (61, 61') der beiden Servoeinrichtungen miteinander verbindbar sind über ein doppelt wirkendes Ventil-Bypass-System (75), das in den benachbarten Böden (34) der Zylinder (32) angeordnet ist.

8. Lenkhilfe nach Anspruch 7, dadurch gekennzeichnet, daß die Ventile des Bypass-Systems jeweils am Ende des Hubes durch Anschlag an dem entsprechenden Kolben (44, 47) betätigbar sind.

# FIG. 1

0 136 233

FIG. 2